(19) Europäisches Patentamt
European Patent Office
Office européen des brevets

(11) **EP 3 428 681 A1**

(12) **EUROPEAN PATENT APPLICATION**

(43) Date of publication:
**16.01.2019 Bulletin 2019/03**

(51) Int Cl.:
***G01S 15/10*** (2006.01)     ***G01S 15/89*** (2006.01)
***G01S 13/28*** (2006.01)

(21) Application number: **17181493.2**

(22) Date of filing: **14.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Melexis Technologies SA**
**2022 Bevaix (CH)**

(72) Inventor: **KLUGE, Wolfram**
**01109 Dresden (DE)**

(74) Representative: **DenK iP**
**Hundelgemsesteenweg 1116**
**9820 Merelbeke (BE)**

Remarks:
Amended claims in accordance with Rule 137(2) EPC.

(54) **METHOD FOR CODED ULTRASONIC ECHO DETECTION**

(57)      A method of signal processing for suppressing at least one sidelobe of an autocorrelation function between a received code sequence (Rx) and a mismatched filter coefficient vector comprises
- setting a filter coefficient vector (Hopt),
- modifying the filter coefficient vector (Hopt), thus generating a modified filter coefficient vector (H'opt),
- correlating (305) the modified filter coefficient vector (H'opt) with the code sequence (Rx) yielding an autocorrelation function comprising a main peak and sidelobes,

- generating (306) a performance parameter that describes the sidelobe suppression of the autocorrelation function,
- setting (308) the modified filter coefficient vector (H'opt) as the new filter coefficient vector for a subsequent iteration if the performance parameter shows a performance improvement,
- discarding the modified filter coefficient vector (H'opt) if the performance parameter shows no performance improvement.

FIG. 3

## Description

**Field of the invention**

The invention relates to the field of echo detection. More specifically it relates to methods for pulse compression for minimizing sidelobes.

**Background of the invention**

Radar and other object-detection systems usually detect objects by detecting their echoes of signals sent by a transmitter. In many applications, the time between the transmitted and received wave is measured, and the distance to the obstacle can be calculated with the well-known speed of sound. The detection range can be increased by increasing transmit signal power, but there are limitations imposed by the maximum excitation voltage of transducers (e.g. piezo-transducers), which is limited due to saturation effects. Higher excitation voltages may even destroy the piezo crystal structure of a transceiver. A possible solution is increasing the duration of the transmit pulse, but since this parameter defines the resolution of closely spaced objects, it is a less preferred solution. One approach to increase the transmitted signal power is to use code sequences instead of a pulse. At the receiver, a matched filter is used to perform pulse compression correlation, in order to generate a pulse from each echo received

Hence, pulse compression is a well-established radar technique that creates a virtually narrow, strong pulse out of a weak, long pulse. Pulse compression is achieved by modulating the transmitted long pulse and correlating its received reflection with a reference modulated pulse stored in the receiver. However, autocorrelation of the received code sequence by the transmitted code sequence presents good signal to noise ratio (SNR), but the technique is not free from artifacts. For example, secondary peaks (sidelobes) appear around the main peak, which can mask smaller proper echoes from close objects, or can be interpreted as (false) echoes, or can even partially mask the main pulse.

In radar applications, by choosing an appropriate code and length thereof, it is possible to obtain a large peak-to-sidelobe ratio, minimizing the problem. However, it is not always possible to increase the length of the code if the detection system uses frequencies lower than those of radar systems, such as in ultrasound detection systems.

Hence, correlation sidelobe suppression is an important factor for pulse compression in radar systems and in ultrasonic echo detection. It can also be advantageous for achieving a high signal to noise ratio, and for allowing the detection of small echoes in the presence of large echoes. Earlier solutions comprise signal windowing, which provides smooth rise and fall of the signal amplitude. However, windowing the signal still produces spectral leakage, and windowing mainly suppresses sidelobes far from the main peak, so the problem of sidelobe presence is not solved. In addition, signal windowing reduces the signal energy transmitted and therefore decreases the enhancements of coded transmission.

In some cases, mismatched filters (MMF) are also used to reduce autocorrelation sidelobes. These type of filters are usually longer than the matched filter, which give a higher degree of freedom in filter design process (and a higher degree of sidelobe suppression). For example, document US 7492312 B2 shows an implementation which obtains a filter based on a multiplicative inverse of the autocorrelation function (ACF) of a Barker code. A multiplicative expansion is applied to approximate the transfer function of the inverse filter, from which a mismatched filter (MMF) is obtained.

However, most techniques are dedicated to specific classes of code.

**Summary of the invention**

It is an object of embodiments of the present invention to provide a method, system and sensor to obtain high resolution echo sensing, effective autocorrelation with low leakage, and processing and detection of echo signals using coded sequences.

It is an advantage of embodiments of the present invention that an optimized response can be generated from the signal in a universal approach which can be applied to any filter.

It is an advantage of the present invention that sidelobes in the autocorrelation function can be decreased, so as not to present a negative influence in echo detection. It is an advantage of embodiments of the present invention that the filter can be longer than the original code, thus increasing effectivity in further reducing sidelobes.

It is an advantage of embodiments of the present invention that an optimized mismatched filter of an echo detection sensor, such as an ultrasound sensor, can be provided.

In a first aspect, the present invention provides a method of signal processing for suppressing at least one sidelobe of an autocorrelation function between a code sequence and a mismatched filter coefficient vector. With suppressing sidelobes is meant that the amplitude of the sidelobes is decreased. The sidelobes may be, but do not have to be, fully removed. The method comprises

- setting a filter coefficient vector (Hopt),
- modifying the filter coefficient vector (Hopt), thus generating a modified filter coefficient vector (H'opt),
- correlating the modified filter coefficient vector (H'opt) with the code sequence yielding an autocorrelation function comprising a main peak and sidelobes,
- generating a performance parameter that describes the sidelobe suppression of the autocorrelation function,
- setting the modified filter coefficient vector (H'opt) as the new filter coefficient vector for a subsequent iteration if the performance parameter shows a performance improvement, and
- discarding the modified filter coefficient vector (H'opt) if the performance parameter shows no performance improvement.

In a method according to embodiments of the present invention, generating the modified filter coefficient vector (H'opt) comprises

- setting a predetermined noise signal,
- scaling the noise signal by a first predetermined factor such that the amplitude of the noise signal is lower than the coefficients of the filter coefficient vector (Hopt), and
- adding the scaled noise to the filter coefficient vector (Hopt).

In such a method, for the subsequent iteration a new noise signal may be set by a second predetermined factor smaller than the first predetermined factor.

It is an advantage of embodiments of the present invention that the linear distortion of band pass characteristic of transducer is taken into account.

In a method according to embodiments of the present invention, the performance parameter may be an error value defined by the ratio between the integrated sidelobe power and the main peak amplitude value.

A method according to embodiments of the present invention may further comprise filtering the noise signal via a bandpass filter, for suppressing noise energy in the stop-band of the code spectrum before adding the scaled noise to the filter coefficient vector.

It is an advantage of embodiments of the present invention that a good stop band rejection is obtained, reducing the need of low-pass filtering in the path of the receiver signal.

A method according to embodiments of the present invention may further comprise repeating the steps a predetermined number of times.

A method according to embodiments of the present invention may further comprise a pre-step in which the filter coefficient vector is set to a windowed code sequence corresponding to the matched filter response and a first performance parameter value determined by a characteristic of the sidelobes with respect to a characteristic of the main pulse calculated with the matched filter response.

It is an advantage of embodiments of the present invention that the mismatched coefficient can be calculated in a first step by a matched coefficient, including the performance parameter.

In a method according to embodiments of the present invention, the code sequence may be oversampled. A predetermined number of samples around a maximum value of the autocorrelation function may not be considered for generating the performance parameter.

It is an advantage of embodiments of the present invention that signal processing in the receiver can be done with oversampling, advantageously obtaining easily time synchronization and frequency offset correction before sampling.

In embodiments of the present invention, the code sequence may be based on a Zadoff Chu sequence. It is an advantage of embodiments of the present invention that maximum signal power is obtained from a digital power amplifier. It is a further advantage of embodiments of the present invention that a correlation can be obtained which is insensitive to frequency offset due to Doppler shift. It is a further advantage that Zadoff Chu codes are also suitable to provide a slim autocorrelation peak and a reasonable main peak to sidelobe peak ratio.

In a second aspect, the present invention provides a system for suppressing at least one sidelobe of an autocorrelation function between a received code sequence and a corresponding transmitted code sequence. The system comprises

- a code generator for generating a code sequence,
- means for adapting the frequency of the code sequence,
- a correlator for implementing an auto-correlation function between two code sequences, and
- a processing unit adapted to perform the method of any of the embodiments of the first aspect.

It is an advantage of embodiments of the present invention that using a received signal mixer reduces processing load that would be needed if the correlation was performed at the ultrasound frequency.

The system may further comprise a baseband filter for removing noise in unwanted frequency bands. This way, a good stop band rejection may be obtained, reducing the need of low-pass filtering in the path of the receiver signal.

In a third aspect, the present invention provides a sensor for echo detection comprising a windowed code sequence generator, at least one amplifier, a signal transmitting system for transmitting a code sequence and a signal receiving system for receiving echoes from the transmitted code sequence, at least one impulse response low-pass filter for providing a coded sequence from received echoes, further comprising a system according to the second aspect of the present invention.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

**Brief description of the drawings**

FIG. 1 illustrates the relationship between the main peak and the sidelobes, expressed in decibels (dB), as a function of the sequence code length for a Zadoff Chu code.

FIG. 2 illustrates a block diagram showing the code generation and approximation of the transmitted signal, as well as generation of the input signal for the mismatched filter (MMF) approximation.

FIG. 3 illustrates a block diagram showing the iteration loop for optimizing the MMF coefficient vector H'opt.

FIG. 4 illustrates an exemplary sensor according to embodiments of the present invention for obtaining the code sequence and the autocorrelation function from the echoes received thereby.

FIG. 5 illustrates part of an exemplary sensor in which signal is sent through one transducer or transmitter and the echo is received through a different transducer or receiver.

FIG. 6 illustrates a diagram showing the magnitude of a transmit baseband signal Tx with windowing (ramping).

FIG. 7 illustrates the envelope of the received signal Rx compared to the transmitted signal Tx.

FIG. 8 illustrates a diagram showing the autocorrelation function (ACF) of the received signal Rx (in dB) with respect to the time of main peak detection (set at t = 0), prominently showing the correlation sidelobes for different matched filter (MF) correlations.

FIG. 9 illustrates two diagrams showing the comparison between ACF for a MF and a MMF, both in linear scale (left diagram) and in dB (right diagram).

FIG. 10 illustrates the envelope of the matched filter compared to the envelope of the mismatched filter, as well as the received signal (filtered by the transducer and the baseband filter). The lower row shows few parameters of the iteration loop.

FIG. 11 illustrates a diagram showing the mismatched filter coefficients on the left and the resulting spectrum on the right.

FIG. 12 illustrates a diagram showing the same as FIG. 10, but without noise filtering.

FIG .13 illustrates a diagram showing the ACF and the MMF coefficients for several values of the oo factor.

FIG. 14 illustrates a diagram showing the spectrum of the MMF coefficients for several values of the oo factor.

FIG. 15 illustrates a diagram showing two exemplary echo plots for objects with different distances therebetween.

FIG. 16 illustrates a diagram showing the real, imaginary parts and envelope of the received signal Rx.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

**Detailed description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The present invention relates to echolocation and detection of objects by sensing echoes. It presents methods for processing echo signals, and use of such methods in object-detection sensors, such as radars, ultrasonic sensors and transducers, to carry out such detection and signal processing. Although the method can be applied to radar sensing, it can advantageously be applied to sensors using signals with frequencies under 1 MHz, for example between 1 MHz and hundreds of Hz, such as ultrasound signals. The present invention, however, is not limited thereto, and it can be applied to any other system such as sonar or radar.

Where in embodiments of the present invention reference is made to "a code sequence", reference is made to a type of signal comprising a pulse train which can reach long distances. Transmitted and received signals (Tx, Rx) comprise code sequences in embodiments of the present invention. Code sequences comprise a larger bandwidth and a longer duration than a single pulse, and therefore contain more energy, but do not negatively affect the resolution of object detection. Code sequences also use safe ranges of frequencies, which would not damage the equipment, for example. More specifically within the frame of ultrasonic sensors, ultrasound acoustic waves have been used for measuring a distance to an object for a long time. In most applications, a short ultrasound wave is transmitted and the wave reflected back from an obstacle is received. The time between the transmitted and received ultrasonic wave is measured and the distance to the obstacle is calculated with well-known speed of sound. A larger detection range can be achieved with increased transmit signal power. However, the excitation voltage of a piezo transducer is limited due to saturation effects, and higher excitation voltages can even destroy the piezo crystal structure. The alternative solution of increasing the duration of the transmit pulse is suboptimal, since pulse duration defines the resolution of closely spaced objects. Thus, in ultrasonic sensors, the transmitted signal power can be advantageously increased by using code sequences instead of a pulse.

Transmitted code sequences are sent by a transmitting device or system. Echoes return upon interaction of the pulse train with detectable objects. The echoes are then received by a receiving device or system, in which pulse compression can be performed. The energy of the code sequence is concentrated in a short pulse, advantageously increasing signal-to-noise ratio (SNR), allowing weaker echoes to be detected, and also increasing detection range.

Where in embodiments of the present invention reference is made to "autocorrelation", reference is made to an approach of pulse compression in system theory, in which a received code sequence is correlated by the transmitted code sequence. This approach provides optimal SNR in the presence of white noise, which is a good model for signal noise in most cases.

Where in embodiments of the present invention reference is made to "main pulse", reference is made to a maximum peak which contains information of an echo from an object. The main pulse contains the maximum autocorrelation function (ACF) value (main peak), but may not be limited thereto.

The effect of pulse compression, by performing an autocorrelation, does not generate a single peak, but also side pulses around the maximum ACF value. Where in embodiments of the present invention reference is made to "sidelobes" or "autocorrelation sidelobes", reference is made to said artifacts or side pulses. They appear as peaks detected after and before the detection of the main peak, and they are usually separated by valleys. Due to oversampling, one or more samples may be considered part of the main pulse. The sidelobes may or may not be symmetrical around the main peak. They may affect the signal detection of closely spaced objects, or mask them, or even result in false detections.

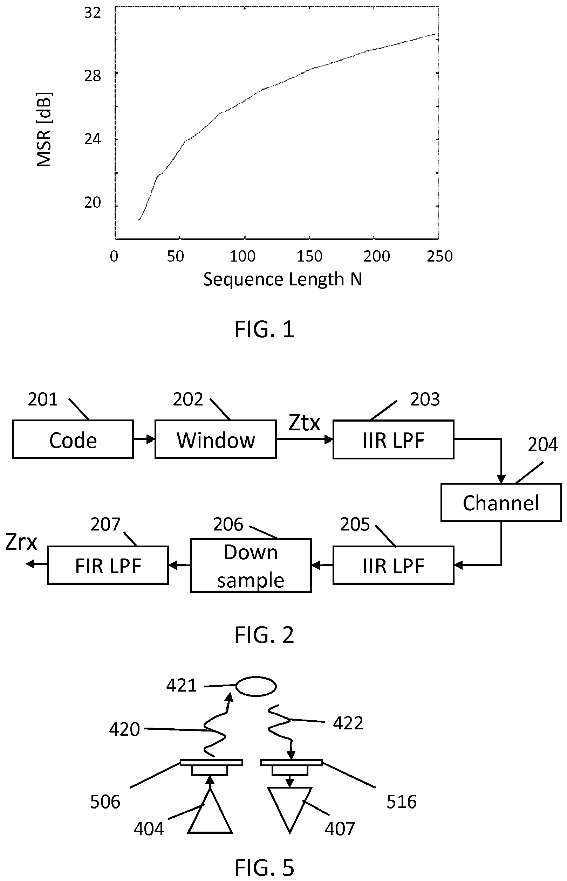

In a first aspect, the present invention relates to a method for reducing the autocorrelation sidelobes. One way to reduce these autocorrelation sidelobes is to increase the length N of the code sequence. FIG. 1 shows the relationship between the energy of the main pulse with respect to the side peak ("main pulse-to-sidelobe ratio", MSR), measured in decibels, as a function of the length N of the code sequence for an exemplary Zadoff Chu sequence, which is a chirp-like code. As can be seen from the graph, the MSR is not proportional to the length N of the code sequence. A reasonable sequence length <100 does lead to MSR < 40 dB which can be easily applied to radar applications, in which a large bandwidth of some 100 MHz is available, so that code sequences with N>100 are applicable. However, for ultrasonic applications, bandwidth is limited to some kHz and the sequence duration must be in the order of milliseconds. For example, with 3 kHz bandwidth (BW) and 4 ms sequence duration (Tc), the code length is N = Tc*BW = 12. Therefore, using long sequences to reduce the autocorrelation sidelobes is a limited resource.

Another approach to reduce the autocorrelation sidelobes is to use signal windowing. In time domain, the transmitted code sequence is windowed, so that the signal amplitude rises and falls smoothly. This method mainly suppresses sidelobes far from the main pulse, so that it does not solve the problem completely, only to some extent. One of the main reasons of using transmission of code sequences is increased transmission of energy; however, signal windowing now again reduces the transmitted energy.

Yet another approach to reduce the autocorrelation sidelobes is the use of a mismatched Filter (MMF) instead of a matched filter (MF) for the autocorrelation. The mismatched filter is usually longer than the matched filter to get a higher degree of freedom in the filter design process and, as a result, in the degree of sidelobe suppression.

The method of embodiments of the present invention comprises obtaining suitable coefficients of the MMF which reduce sidelobes, by providing a mismatched filter approximation by an iterative optimization method in which the filter is modified by scaled noise, autocorrelation is performed and the resulting autocorrelation function is compared to the autocorrelation function obtained in a previous step of the iteration.

In embodiments of the present invention, the method comprises generating a code sequence and obtaining a received signal from an echo response, as shown in the diagram of FIG. 2.

Generating 201 the code can be done using any suitable code sequence which provides a slim auto-correlation peak and a reasonable peak-to-sidelobe ratio. However, Zadoff Chu sequences (which are derived from linear chirp signals) have several specific advantages. For example, complex valued code sequences with constant envelope (polyphase sequences) are preferred since they provide the maximum signal power from a digital (limiting) power amplifier. Moreover, it is preferred to provide a code whose correlation is insensitive to, or at least not seriously affected by, frequency offset due to Doppler shift (caused when the echo originates from a moving object). Both criteria are fulfilled by the class of Zadoff Chu codes.

In case of Doppler shift, the signal is time compressed or expanded, when the object moves toward or away from the receiver, respectively. This leads to a frequency shift of the chirp signal. However, a frequency shifted linear chirp signal (from which Zadoff Chu codes are derived) is still partly correlated with its original, as long as the frequency offset is less than the chirp frequency sweep. Hence, the present invention is advantageously suitable for detecting moving objects.

The Zadoff Chu code is defined as follows:

$$z(n) = e^{j\varphi(n)}$$

with

$$\varphi(n) = (n - 1)(u\frac{N-1-n}{2} - q),$$

where N is the number of code chips (equal to the length of the sequence) with n=1...N. The parameter u must be prime to N and parameter q can be any integer.

In general, the Zadoff Chu code comprises a sampled linear frequency chirp. The parameter u scales the frequency range of the chirp and the sign of u defines the sweep direction (up or down). Parameter q describes a frequency offset of the chirp.

Further investigation of the autocorrelation properties turned out that the main peak to sidelobe ratio is maximal for |u| = 1. Any higher values of u provide larger sidelobe values.

To get the chirp sweep symmetrical to the center frequency (in baseband symmetrical to zero frequency), a value of q=N/2 can be used. Accordingly, two code sequences are suitable for ranging: an up-chirp (u=+1) and a down-chirp (u=-1).

In embodiments of the present invention, the signal (code sequence) can be generated 201 by oversampling, in order to advantageously model the transducer as a digital filter that is similar to an analog low-pass filter. All signal processing is described in baseband domain (using I/Q signals), so that the transducer band-pass characteristic at the predetermined frequency (e.g. ultrasonic frequency) is transferred to a low-pass characteristic. In some embodiments, windowing can be applied 202 to the code before introducing the transducer model. However, the present invention is not limited to windowing. Any other technique applied to the code which results in a reduction of autocorrelation sidelobes can be applied, e.g. reduction of rise and fall time for the code sequence. In particular, windowing reduces sidelobes far away from the main peak. The transmitted signal Tx is coded, and denoted as Ztx in the present case. A transducer model is included 203 to model a transmitted sequence code; the model may comprise an infinite impulse response (IIR) low-pass (LP) filter. The signal is sent to a channel 204, in which echoes are generated, and the echo signal is received. In some embodiments, a second transducer model is included 205 in the signal path, comprising e.g. an IIR LP filter, for the transducer when the echo of the code sequence is received. Afterwards, the signal can be optionally down-sampled 206 to the target sampling rate Fs, which is the frequency intended to use in the receiver. The signal can also be optionally passed 207 through the same finite impulse response LP filter that is used in the receiver. The receiver signal Rx, upon filtering, is denoted as Zrx, which is further used in the MMF iteration process.

Embodiments of the present method advantageously take into account the linear distortion of the band-pass characteristic of the transducer into account.

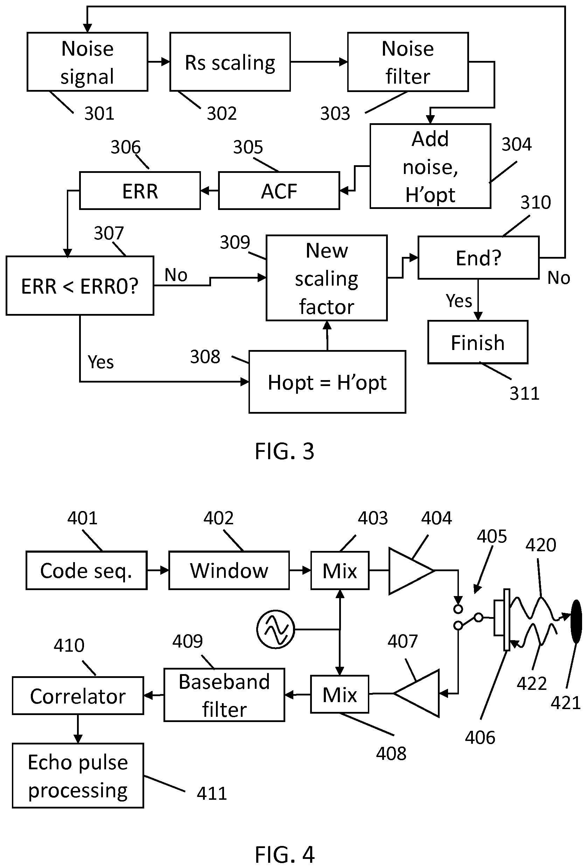

In embodiments of the present invention, a pre-step of the method is provided, in which a filter coefficient vector Hopt is set to the windowed code signal, which corresponds to the matched filter response H, which is advantageously a good approximation at the beginning of the algorithm. The present method aims to modify these filter coefficients by an iteration process, so that the sidelobes of the correlation with the received signal Rx are minimized. According to embodiments of the present invention, the MMF iteration process comprises the following steps, as illustrated in the diagram of FIG. 3:

- Generating 301 a random signal (noise), with an amplitude much smaller than the coefficients of filter Hopt, e.g. it can be scaled 302 by a factor Rs, so that the noise amplitude is much smaller than the coefficients of the filter Hopt. If the filter Hopt is a complex-valued baseband signal (e.g. if the code sequence is a Zadoff Chu code), the noise signal is needed complex-valued as well.
- Filtering 303 the noise signal with a bandpass-filter, so that noise energy in the stop-band of the code spectrum is suppressed.
- Adding 304 the scaled noise to the filter Hopt, thus generating a modified filter coefficient vector denoted as H'opt.
- Yielding 305 an autocorrelation function ACF by correlating H'opt with the filtered receiver signal Zrx. The generated function comprises at least a main peak, and usually comprises unwanted sidelobes.
- Generating 306 a parameter "ERR" characteristic of the sidelobes with respect to the main pulse (which comprises the main peak and may comprise a predetermined number of close sidelobes). For example, an error value can be defined as the ratio between the integrated sidelobe power and the main pulse value. The error ERR is compared 307 to the previous error value ERR0. If the error value of the modified filter coefficient vector H'opt is lower than the one of the previous iteration loop, then the modified filter coefficient vector H'opt is taken 308 as new the filter coefficient vector Hopt for the next iteration (Hopt=H'opt). Additionally, the calculated error ERR can also be taken as comparative value ERRO for the next iteration.
- Calculating 309 a new scaling factor for the next iteration loop, by obtaining a slightly smaller factor, for example: R's = Rs * a, where a = 1-e with e<<1. Hence, the noise factor Rs decreases over loop iterations with an exponential decay and provides finer and finer iteration steps.
- Discarding H'opt if the generated performance parameter ERR does not reflect a reduction of the influence of sidelobes with respect to the mean pulse as compared to the generated parameter of the previous iteration. This can be estimated by comparing 307 the ERR parameter with the ERRO parameter obtained from the previous iteration. In embodiments of the present invention, if the error value ERR of Hopt' is not better than the error value ERRO of Hopt, then H'opt is discarded.

In embodiments of the present invention, the optimization criterion is the minimization of the defined parameter ERR (e.g. the error value). In the pre-step of the method, before iteration starts, the ERR parameter of the pre-step would be calculated using the ACF obtained from H, because in the pre-step Hopt = H. The present invention is not limited to this pre-step, and other starting points can be used (e.g. zero), but H has the advantage of approximating reasonably well at the beginning of the iteration.

In embodiments of the present invention where the signal processing is performed at the original code rate, the autocorrelation main peak occupies just one sample. In this case it is simple to distinguish between main peak and sidelobes. The maximum of the ACF is then used as the main pulse, e.g. for MSR calculation. However, in embodiments of the present invention where the code is oversampled, it is advantageous to generate 306 the performance parameter ERR with excluding a predetermined number of samples around the main peak from the calculation. The value which characterizes the number of samples excluded from the calculation of the parameter (e.g. the error) is defined as "oo factor". The oo factor would be null if the code is not oversampled. In embodiments of the present invention wherein the code is oversampled, samples in the range -(osr+oo) ... +(osr+oo) around the maximum ACF value are considered as part of the main pulse and are excluded from the sidelobe power calculation for the calculation of the MSR, which can be used to generate the performance parameter (e.g. the error). In this case the main pulse comprises the main peak and a number of samples given by the oo factor.

More specifically, in case the error value is used as parameter ERR, first the main peak amplitude is obtained by obtaining the maximum of the ACF. Then, the integrated sidelobe value is obtained. The present invention is not limited to the error value as the ratio between integrate sidelobe power and main peak amplitude, and other values can be used, e.g. the sum of sidelobe power, rms-value, the sum of absolute sidelobe values sum(abs(sidelobe)), etc; thus it would be possible to calculate the ERR parameter as rms(sidleobe)/rms(peak), or (sidelobe power)/(peak power), etc.

In the calculation of ERR, embodiments of the present invention may comprise the step of excluding a number of samples next to the main peak, the number of excluded samples being given by the oo factor. Finally, dividing the integrated sidelobe value by the main peak amplitude gives the error value. The present invention is not limited to the error value as the parameter ERR, and other parameters or modifications can be used as parameter ERR, for example based on absolute values.

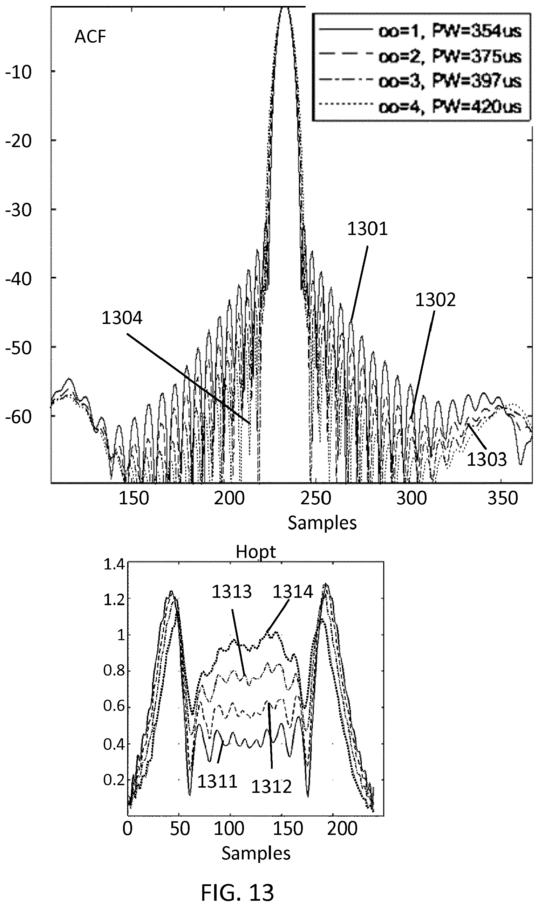

The oo factor can be used to trade off the main pulse width and the noise sensitivity, as will be discussed with reference to FIG. 13. If oo is small, (e.g. 1 or 2) then the algorithm tries to suppress signal energy from the main peak, which leads to a different filter coefficient vector Hopt. Since the windowing causes a widening of the main peak, the envelope of filter coefficient vector Hopt increases the weight of the slopes of the coded transmitted signal Ztx, and reduces the weight on the middle part of the burst. This can be considered as a compensation of the windowing done on the transmit side. However, due to the fact that Hopt is used at the receiver, noise from the receive path is emphasized. Generally, the oo factor can be used to trade off the main pulse width and the noise sensitivity.

The iteration can be repeated until an END condition is met 310, finishing 311 the loop. For example, the iteration can be repeated a predetermined number of times, after which the loop ends. However, other criteria can be followed to stop the iteration and give a final value. For example, obtaining a value of ERR or of the integrated sidelobe value under a pre-set threshold value could be used to stop the iteration. For example, a criterion establishing to stop the loop when no better filter value vector Hopt is found after a predetermined number of iterations (e.g. >100).

An exemplary embodiment of a loop for a method of the present invention is shown in the following optimization algorithm:

Start values, M = 100000; Rs = 0.01; a = 1-2/M

Step 1: Create complex noise vector: noi = rnd() + j*rnd()
Step 2: Band pass filtering of noise signal: noi_bp = filter(noi)
Step3: Create modified Hopt: H'opt = Hopt+Rs*noi_bp
Step 4: Correlate: ACF = Zrx**H'opt
Step 5: Main peak amplitude: Mpeak = max(ACF)
Step 6: Deleting main peak: ACF(idx ±oo) = 0
Step 7: Integrated sidelobe value: isl : sum(ACF*ACF)
Step 8: Error value to be minimized: Err' = isl/Mpeak
Step 9: If (Err'<Err)

Yes Step 10: Take H'opt for next loop: Hopt = H'opt
Step 11 Take target value for next loop: Err = Err'
No Step 12

Step 12: for instance if Step 9 is in the yes path, decreasing noise scale factor: Rs = Rs*a
Step 13: Loop counter increase: m=m+1
Step 14: If (m<M)

Yes Back to step 1
No End

In step 3, the values for the modified filter value vector H'opt are obtained by adding noise to the previous filter values Hopt (which corresponds to the coefficients of the mismatched filter of the previous steps, except in the pre- step in which it corresponds to the matched filter H). Then in step 4 the correlation function is calculated using the previously obtained sequence Zrx from the received signal, from which the maximum peak value (main peak) is obtained in step 5. Then, the main peak and samples next to the main peak are removed from the ACF in step 6 (where "idx" stands for "index" in MATLAB coding). In this step, a number of samples next to the main peak are cut off and removed. The number of samples to be removed at each side of the peak is given by the factor "oo". Only remaining sidelobes are integrated in step 7. In step 8, the ERR parameter is obtained as, in this case, the ratio between sidelobes and main peak, which is the value to minimize. If the newly obtained value is not smaller, the noise factor is decreased and the loop starts again. If the newly obtained value is smaller, then the obtained coefficients for the mismatched filter are used in the next iteration, the ERR is updated also with the new value, and then the noise factor is decreased, and the loop starts again.

In some embodiments, the error in the pre- step can be defined by the ratio between the integrated sidelobe power and the main peak value calculated with the matched filter response H. In advantageous embodiments, the initial error value can be set to a high value, so that the first iteration leads to an improved error value forcing the step 9 to a "yes" state.

In a second aspect, a system is provided for advantageously suppressing one or more sidelobes from the autocorrelation function between a received code sequence Zrx and a corresponding transmitted code sequence Ztx, according to embodiments of the method of the first aspect. For example, the method can be carried out in hardware adapted to carry out an embodiment of the method of the first aspect. In other embodiments, the method can be carried out in software, for example all the iteration steps, without special hardware needed. The system may include an output means, such as a display.

In a further aspect, the present invention relates to a sensor with object detection by echo-location.

FIG. 4 shows a block diagram of an ultrasonic ranging system which exploits coded signals. On the transmit side, the code sequence, for example a Zadoff Chu sequence, is generated in a code generator 401. The present invention is not limited thereto, and it is possible to apply any other type of sequence. The code sequence may for instance have a length between 16 and 100, e.g. a length of 32, and may then be subject to windowing 402. The windowed signal is then mixed to ultrasonic frequencies, for example by the mix block 403. After the signal is up-converted to the ultrasonic frequency, an amplifier 404 provides a sufficient drive voltage to a transducer 406. It is also possible to generate the transmit signal directly at the ultrasonic frequency and omit the up-conversion step, advantageously reducing the complexity of the system. A switch 405 (e.g. an Rx/Tx switch) in transmit position allows the signal to be transmitted through the transducer 406 as ultrasound signals 420 which, upon interaction with an object 421, create echoes 422 which are bounced back to the transducer 406.

Immediately after transmitting, the switch 405 switches to the receive position so the transducer 406 acts as a microphone for receiving the echoes 422. The received echo signal is amplified by an amplifier 407, and then it is sent to a mix block 408 where it is downconverted to baseband frequencies, after which it passes a filter 409 , for instance a baseband filter or a low pass filter to remove noise in unwanted frequency bands. In cases wherein the code is a complex value, a low pass filter can preferentially be used (in some embodiments, it is a low pass filter in the baseband domain, e.g. a complex-valued filter), acting as a low-pass filter to remove noise in unwanted frequency bands. Hence, the "real" noise from the channel and transduces is filtered. A correlator 410 performs a pulse compression step taking into account the coefficients of the mismatched filter 409, and sends a sequence of echo pulses to the processing module 411, which can be a processor, a remote unit, a digital hardware, a CPU, etc.

In embodiments of the present invention, instead of a single transducer 406 and a switch 405, two transducers 506, 516 may be used, as illustrated in FIG. 5: a first transducer (or dedicated transmitter) 506 for transmitting the probe code sequence and a second transducer (or dedicated receiver) 516 for receiving the echoes. The system may comprise multiple receivers, making the cost of the additional transducer less critical. Since code sequences are typically longer than pulsed signals, the advantage is that the receiver is able to receive echoes from close objects even if the transmitter is still transmitting the code sequence.

In embodiments of the present invention, the transmitter may emit signals at, for example, ultrasonic frequencies, for example frequencies between 20 KHz and 100 KHz. The code, however, can be applied to other frequencies. In embodiments of the present invention, values of for example between 30 KHz and 100 kHz can be used for sensors in air, 50 KHz, etc.

Embodiments of the present invention provide correction of the autocorrelation sidelobes, typical of systems that use a sequence code. However, the present method and devices present other advantageous features. In these signal processing systems, the main bandwidth limitation arises from the piezo transducer, which operates at resonance frequency and therefore has band-pass characteristic. Furthermore, a transducer 406 or 506, 516 is twice in the signal path (e.g. as a transmitter and a receiver), so its frequency response is squared. The baseband filter 409 provides a further linear signal distortion. However, its impact on the bandwidth limitation and distortion is rather moderate since the bandwidth can be chosen by the designer. Thus, even a perfect correlation with the code sequence would result in correlation sidelobes, which are not tolerable. In embodiments of the present invention, all signal filters in the signal path can be advantageously taken into account when generating the mismatched filter coefficients. For example, the influence of the transducers in the signal can be modeled by the IIR LP-filters 203, 205, as shown in FIG. 2.

The reading of the sensor (e.g. a sidelobe-free measurement), e.g. the signal coming out of the processing module 411, can be sent to an output, such as a display, for example for mapping, or to a proximity alarm in a proximity detector, etc.

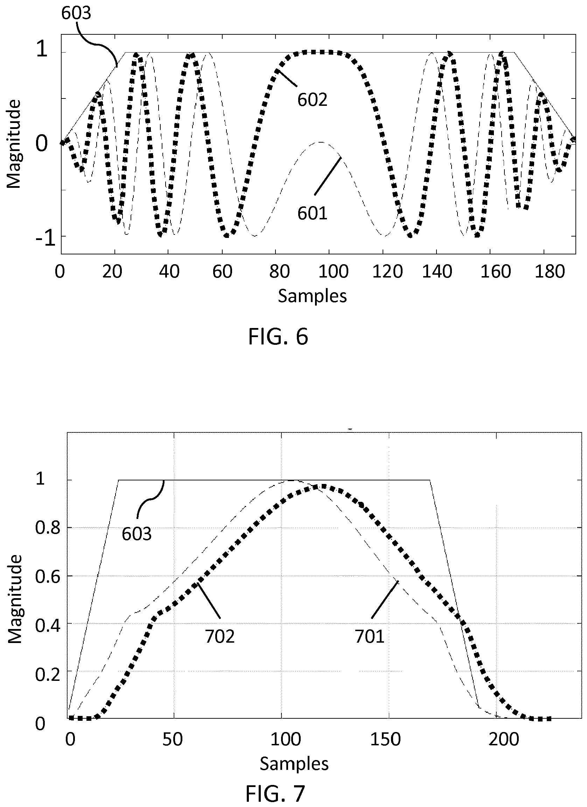

Simulations have been performed using MATLAB, and are presented by reference to FIG. 6 - FIG. 15 . The parameters for the simulation are listed in Table 1.

Table 1

| Parameter | Value | Unit | Remark |
|---|---|---|---|
| N | 32 | | Code sequence length |
| $N_{pad}$ | 4 | | No. of padding bits |
| $F_s$ | 25 | kHz | Sampling frequency |
| Osr | 6 | | Oversampling rate |
| $F_{chip}$ | 4.167 | kHz | Code chip rate, $F_{chip}=F_s/osr$ |
| $F_{du}$ | 1.3 | kHz | Transducer low-pass filter cut-off frequency |
| $F_{cbb}$ | 2.5 | kHz | Baseband filter cut-off frequency |
| Oo | 5 | | Used in iteration loop to separate ACF main peak from sidelobes |
| M | 400000 | | Number of iterations |
| $T_{burst}$ | 7.68 | ms | $T_{burst} = N/F_{chip}$ |

In this example the transmit signal is a linear chirp that sweeps from $F_C-F_{CHIP}/2$ to $F_C+F_{CHIP}/2$, where Fc is the ultrasonic center frequency (typically in the range of 40-60 kHz). As mentioned before, this chirp may correspond to an up-sampled Zadoff Chu code sequence.

The ultrasonic frequency Fc has no effect on the mismatched filter signal processing, so that the transmit signal can be modeled in the baseband domain. So the chirp signal sweeps from $-F_{chip}/2$ to $+F_{chip}/2$. Additionally, a simple linear ramp over 1/8 of the transmit signal duration is applied at the beginning and the end of the transmit signal. While any type of windowing can be performed in the signal, linear ramp is preferred. As an example only, any of Hamming, Hanning, Raised Cosine or Half Sine windowing can be applied. These window functions lead partly to better sidelobe suppression, but they typically have a high implementation effort and reduce the signal power more than a linear ramp. Additionally, linear ramps are advantageously easy to implement. Moreover, the reduction of the average Tx signal power is low, and a non-optimal ramp can be easily compensated by the mismatched filter.

FIG. 6 shows the transmit signal Tx in baseband domain with linear ramping, separated in its real part (dashed line 601), imaginary part (dotted line 602) and the envelope (solid line 603).

The transducer operates at resonance frequency, so its frequency response is that of a resonant tank, which is modeled with a 1st order IIR low-pass filter in baseband domain. The transmit signal passes through two transducers. Since the signal sweep of the transmit signal Tx (in this example ranging from - 2083 Hz to +2083 Hz) is larger than the transducer bandwidth of +/- 1300 Hz, the received signal amplitude follows partly the frequency response of the transducer, as the transducer limits the range of detectable frequencies with respect to the signal sweep. Sweeping with a wide frequency range results in a correspondingly narrow echo pulse. FIG. 7 shows the comparison of the envelope of the transmit signal Tx (solid line 603) with respect to the envelope of the received signal Rx (dashed line 701). The received signal Rx is further shaped by the receiver baseband filter, which can be for example a 24-tap FIR filter with Fcbb as cut-off frequency (for example, 2500 Hz). The resulting envelope of the received signal Rx after baseband filter is also shown (dotted line 702).

The filtering by two transducers and the baseband filter results in linear distortions of the signal (as compared to the transmitted signal), leading to high sidelobes as already explained when the received signal Rx is correlated with the transmit signal Tx.

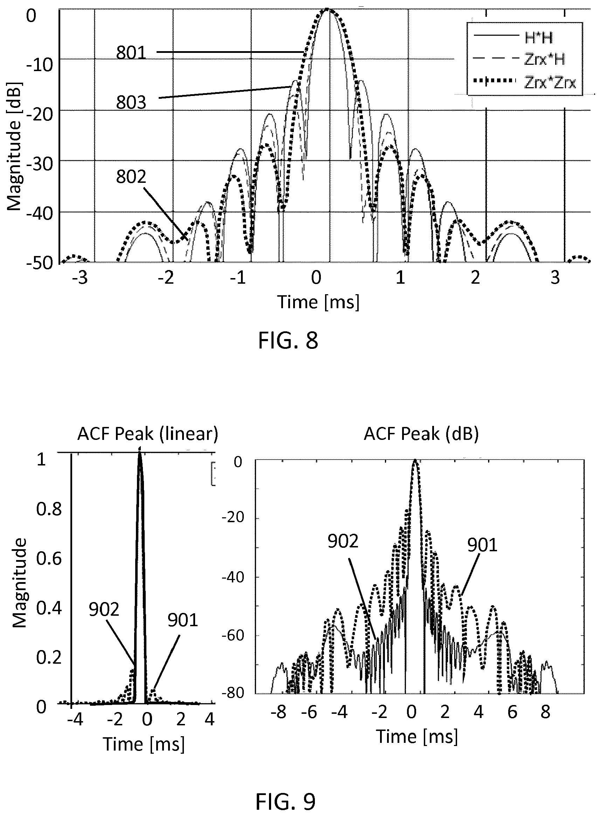

FIG. 8 shows a comparison of the ACF for different matched filter correlations, in particular when the received signal Rx is correlated to itself (dotted line 801), and with the transmit signal Tx (Zrx*H, dashed line 802), and the transmit signal Tx with itself (H*H, solid line 803). It can be seen that the maximum sidelobe ratio is -17, -27 and -14dB, respectively. The relatively good sidelobe rejection of the received signal auto-correlation (dotted line 801) is due to the windowing caused by the transducer band-pass characteristic.

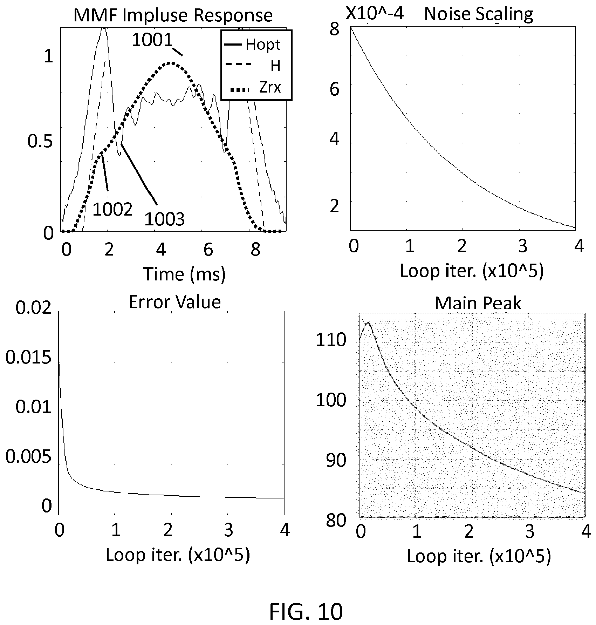

In order to further suppress the sidelobes of the autocorrelation of the received signal Rx, embodiments of the present invention allow correlation with a mismatched filter. The initial values of the mismatched filter optimization are obtained from the transmit signal Tx (H), in a pre-step of the method. The iteration process optimizes the coefficients of H, obtaining a reduction of sidelobes by calculating a mismatched filter by adding noise. The mismatched filter is usually denoted as Hopt, except in the pre- step of the algorithm in which Hopt takes the value of the matched filter H. The results are shown in FIG. 10, showing different plots from the iteration process.

FIG. 9 shows the comparison of sidelobe suppression by the matched filter (Zrx*H) (dotted line 901) with the mismatched filter (solid line 902). The logarithmic plot illustrates that the sidelobes, which are far from the main peak, fall down to about 60 dB (and those sidelobles which are close to the main peak fall to about 40dB) below the main peak, while the linear plot at the left of FIG. 9 shows the pulse that corresponds to each echo in the ranging application. The reduction of sidelobes of ACF of the mismatched filter (after iteration) is noticeable with respect to the ACF of the matched filter (before iteration).

The upper left plot in FIG. 10 shows the envelope of the matched filter H (dashed line 1001) along with the envelope of the signal Zrx (dotted line 1002), which is filtered by the transducer and the receive signal baseband filter. It also shows the envelope of the mismatched filter Hopt (solid line 1003). Sampling is done at 25 KHz, so in this case the values are given as a function of time expressed in miliseconds. The matched filter response H corresponds to the transmit signal Tx. Windowing with a linear ramp of 1/8 burst length is visible.

The upper right and lower row of plots in FIG. 10 show parameters of the iteration progress, for 4 10^5 iterations. The upper right plot depicts the change of the noise scaling factor Rs during the iteration. The chosen performance parameter was the error value, calculated as the ratio (integrated sidelobe power)/(main peak value). The error drops very fast, under 0.003 in little more than 50000 iterations, as shown in the lower left plot. The lower right plot shows the magnitude change of the ACF maximum (the main peak), a side effect that is corrected by Hopt magnitude scaling at the end.

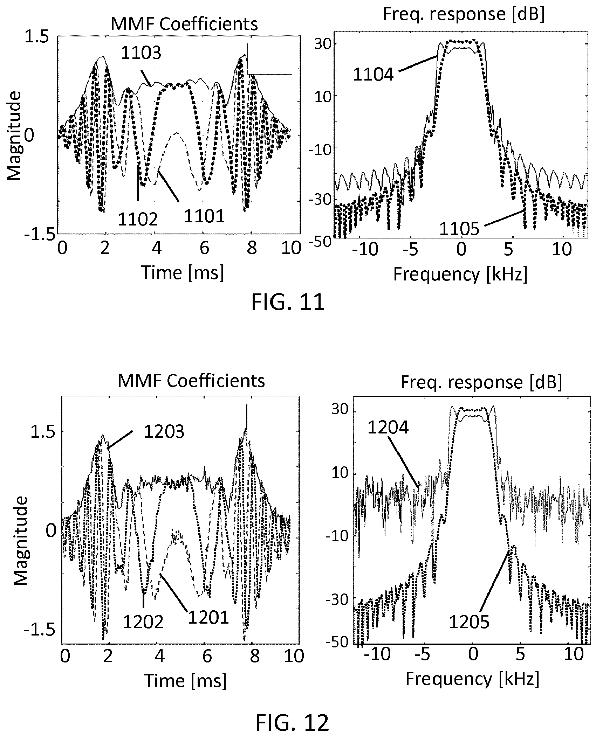

FIG. 11 shows, on the diagram at the left side, the mismatched filter coefficients; in particular, it shows the real part (dashed line 1101) and imaginary parts (dotted line 1102) of the complex-valued mismatched filter response and the envelope (solid line 1103). The similarity to the spectrum of the original chirp signal (FIG. 6) is visible. On the diagram at the right, the spectrum of the mismatched filter Hopt (solid line 1104) is compared to the matched filter spectrum Ztx of H (dotted line 1105). It can be seen that both filters have band-pass character, although the stop-band attenuation of Hopt is reduced to about 5 dB due to the iteration process.

Impact of Noise Filtering

The iteration without noise signal filtering leads to the mismatched filter shown in FIG. 12. On the left side, the mismatched filter coefficients of Hopt are shown for the real part (dashed line 1201), the imaginary part (dotted line 1202) and envelope (solid line 1203), and on the right, its corresponding spectrum for the mismatched filter spectrum (solid line 1204) and matched filter spectrum (dotted line 1205). It is apparent that the noise reduces the stop band attenuation of the inherent band-pass characteristic to about 23dB, compared to >50 dB in the example where noise filtering was used (mismatched filter Hopt, solid line 1104 on the right diagram of FIG. 11).

In general, both mismatched filter versions (with and without noise filtering applied) fulfill the requirement of low sidelobe rejection and can therefore be used. But the version with better stop band rejection needs less additional low-pass filtering in the receiver signal path, which is a preferred approach.

Impact of oo parameter

As described before, the parameter oo determines how many samples besides the ACF main peak are excluded from the error value calculation in the iteration process. In FIG. 13, the ACF (top graph) and the Hopt (bottom graph) are shown as a function of the sample for four values of the the oo factor, e.g. values swept from 1 to 4, specifically for oo = 1 (pulse width of 354 $\mu$s, solid line 1301, 1311), oo = 2 (pulse width of 375 $\mu$s, dashed line 1302, 1312), oo = 3 (pulse width of 397 $\mu$s, dash-dotted line 1303, 1313) and oo = 4 (pulse width of 419 $\mu$s, dotted line 1304, 1314). For smaller values of the oo factor, the main pulse becomes slimmer at the cost of higher sidelobes close to the main peak. The magnitude of the matched filter is shown in the lower plot. For small values of oo, the beginning and the end of the transmit signal is emphasized with respect to the middle part.

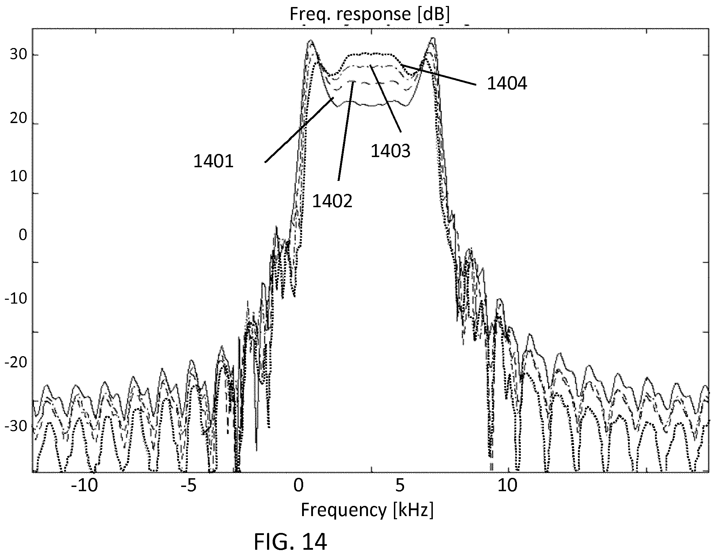

FIG. 14 shows the spectrum of the mismatched filter Hopt for the oo factor sweep shown in FIG. 13, thus four spectra 1401-1404 for the four values of the oo factor 1 to 4. There are peaks in the spectrum at the edges of the pass-band, which are higher for lower oo values. These peaks compensate the band-pass characteristic of the transducer shown in FIG. 7, where the gain is lower for the chirp frequencies at the beginning and the end of the code sequence. It is expected that this compensation leads to a receiver noise increase. Thus, it is apparent that lower oo values lead to a narrower pulse at the cost of lower SNR at the receiver output.

Results on echo signal simulations

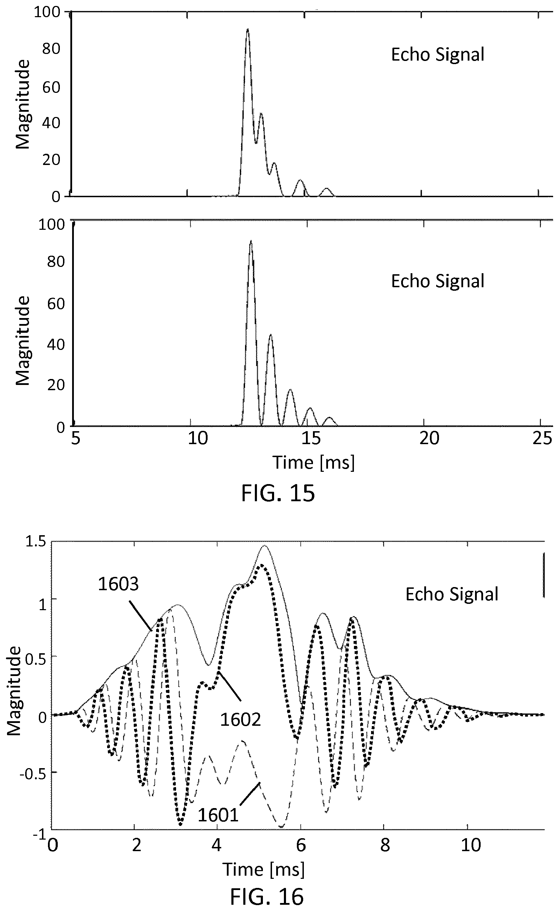

As an example, a scenario with 5 echoes has been simulated, which is shown in the upper diagram of FIG. 15. The echoes are delayed by [0, td, 2*td, 4*td, 6*td] where td=0.56 ms is a predetermined unit delay that corresponds to 10 cm distance. The echo amplitudes are [1.0, 0.5, 0.2, 0.1, 0.05]. The first 3 echoes are from obstacles with 10 cm distance between them, the remaining 2 echoes are from obstacles with 20 cm distance. It can be seen that the pulse width of 0.4025 ms (which is determined mainly by $F_{CHIP}$=4167Hz) is just the limit to distinguish 10 cm-spaced objects.

The lower diagram of FIG. 15 shows another example, in which 15 cm spaced obstacles have been simulated. The echoes are delayed by [0, td, 2*td, 3*td, 4*td] wherein td=0.84 ms is a predetermined unit delay that corresponds to about 15 cm distance. The echo amplitudes are the same as in the upper diagram. The lower diagram of FIG. 15 shows that 5 single pulses are resolved and no sidelobe artifacts are visible, and that the echo signal goes to zero between the pulses. The received signal Rx that corresponds to the lower diagram of FIG. 15 is shown in FIG. 16, in which the real part (dashed line 1601), the imaginary part (dotted line 1602) and envelope (solid line 1603) of the received signal Rx with echoes are shown. It consists of an overlay of time-shifted and amplitude -scaled versions of the code sequence shown in FIG. 6. The zero point of the x-axis is different in the lower graph of FIG. 15 and FIG. 16 due to the particular functions used in the MATLAB simulation for signal processing.

**Claims**

1.  A method of signal processing for suppressing at least one sidelobe of an autocorrelation function between a code sequence (Rx) and a mismatched filter coefficient vector, the method comprising

    - setting a filter coefficient vector (Hopt),
    - modifying the filter coefficient vector (Hopt), thus generating a modified filter coefficient vector (H'opt),
    - correlating (305) the modified filter coefficient vector (H'opt) with the code sequence (Rx) yielding an autocorrelation function comprising a main peak and sidelobes,
    - generating (306) a performance parameter that describes the sidelobe suppression of the autocorrelation function,
    - setting (308) the modified filter coefficient vector (H'opt) as the new filter coefficient vector for a subsequent iteration if the performance parameter shows a performance improvement,
    - discarding the modified filter coefficient vector (H'opt) if the performance parameter shows no performance improvement.

2.  A method according to claim 1, wherein generating the modified filter coefficient vector (H'opt) comprises

    - setting a predetermined noise signal (301),
    - scaling (302) the noise signal (301) by a first predetermined factor (Rs) such that the amplitude of the noise signal (301) is lower than the coefficients of the filter coefficient vector (Hopt),
    - adding (304) the scaled noise to the filter coefficient vector (Hopt).

3.  A method according to claim 2, wherein for the subsequent iteration a new noise signal is set by a second predetermined factor (R's) smaller than the first predetermined factor (Rs).

4. The method according to any of the previous claims, wherein the performance parameter is an error value defined by the ratio between the integrated sidelobe power and the main peak amplitude value.

5. The method according to claim 4, further comprising filtering (303) the noise signal via a bandpass filter, for suppressing noise energy in the stop-band of the code spectrum before adding the scaled noise to the filter coefficient vector (Hopt).

6. The method according to any of the previous claims, further comprising repeating the steps a predetermined number of times.

7. The method according to any of the previous claims, further comprising a pre-step in which the filter coefficient vector (Hopt) is set (308) to a windowed code sequence corresponding to the matched filter response (H) and a first performance parameter value (306) determined by a characteristic of the sidelobes with respect to a characteristic of the main pulse calculated with the matched filter response (H).

8. The method according to any of the previous claims, wherein the code sequence is oversampled.

9. The method according to claim 8, wherein a predetermined number of samples around maximum value of autocorrelation function are not considered for generating the performance parameter.

10. The method according to claim 9, wherein the code sequence is based on a Zadoff Chu sequence.

11. A system for suppressing at least one sidelobe of an autocorrelation function between a code sequence and a corresponding transmitted code sequence, the system comprising

- a code generator (401) for generating a code sequence,
- means (403, 408) for adapting the frequency of the code sequence
- a correlator (410) for implementing an auto-correlation function between two code sequences, and
- a processing unit (411) adapted to perform the method of any of the previous claims.

12. A sensor for echo detection comprising a windowed code sequence generator, at least one amplifier (404, 407), a signal transmitting system (405, 406; 506) for transmitting a code sequence and a signal receiving system (405, 406; 516) for receiving echoes from the transmitted code sequence, at least one impulse response low-pass filter for providing a coded sequence from received echoes, further comprising a system according to claim 11.

**Amended claims in accordance with Rule 137(2) EPC.**

1. A method of signal processing for suppressing at least one sidelobe of an autocorrelation function between a code sequence Rx and a mismatched filter coefficient vector, the method comprising

- setting a filter coefficient vector Hopt,
- modifying the filter coefficient vector Hopt, thus generating a modified filter coefficient vector H'opt,
- correlating (305) the modified filter coefficient vector H'opt with the code sequence Rx yielding an autocorrelation function comprising a main peak and sidelobes,
- generating (306) a performance parameter that describes the sidelobe suppression of the autocorrelation function,

**characterized in that** the method further comprises

- setting (308) the modified filter coefficient vector H'opt as the new filter coefficient vector for a subsequent iteration if the performance parameter shows a performance improvement,
- discarding the modified filter coefficient vector H'opt if the performance parameter shows no performance improvement.

2. A method according to claim 1, wherein generating the modified filter coefficient vector H'opt comprises

- setting a predetermined noise signal (301),

- scaling (302) the noise signal (301) by a first predetermined factor Rs such that the amplitude of the noise signal (301) is lower than the coefficients of the filter coefficient vector Hopt,
- adding (304) the scaled noise to the filter coefficient vector Hopt.

3. A method according to claim 2, wherein for the subsequent iteration a new noise signal is set by a second predetermined factor R's smaller than the first predetermined factor Rs.

4. The method according to any of the previous claims, wherein the performance parameter is an error value defined by the ratio between the integrated sidelobe power and the main peak amplitude value.

5. The method according to claim 4, further comprising filtering (303) the noise signal via a bandpass filter, for suppressing noise energy in the stop-band of the code spectrum before adding the scaled noise to the filter coefficient vector Hopt.

6. The method according to any of the previous claims, further comprising repeating the steps a predetermined number of times.

7. The method according to any of the previous claims, further comprising a pre-step in which the filter coefficient vector Hopt is set (308) to a windowed code sequence corresponding to a matched filter response H and a first performance parameter value (306) determined by a characteristic of the sidelobes with respect to a characteristic of the main pulse calculated with the matched filter response H.

8. The method according to any of the previous claims, wherein the code sequence is oversampled.

9. The method according to claim 8, wherein a predetermined number of samples around maximum value of autocorrelation function are not considered for generating the performance parameter.

10. The method according to claim 9, wherein the code sequence is based on a Zadoff Chu sequence.

11. A system for suppressing at least one sidelobe of an autocorrelation function between a code sequence and a corresponding transmitted code sequence, the system comprising

- a code generator (401) for generating a code sequence,
- means (403, 408) for adapting the frequency of the code sequence
- a correlator (410) for implementing an auto-correlation function between two code sequences,
- **characterized in that** the system further comprises a processing unit (411) adapted to perform the method of any of the previous claims.

12. A sensor for echo detection comprising a windowed code sequence generator, at least one amplifier (404, 407), a signal transmitting system (405, 406; 506) for transmitting a code sequence and a signal receiving system (405, 406; 516) for receiving echoes from the transmitted code sequence, at least one impulse response low-pass filter for providing a coded sequence from received echoes, further comprising a system according to claim 11.

FIG. 1

FIG. 2

FIG. 5

FIG. 3

FIG. 4

FIG. 6

FIG. 7

FIG. 8

FIG. 9

FIG. 10

FIG. 11

FIG. 12

FIG. 13

FIG. 14

EP 3 428 681 A1

FIG. 15

FIG. 16

**EUROPEAN SEARCH REPORT**

Application Number

EP 17 18 1493

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 380 770 B1 (NUTHALAPATI RAO [US]) 19 February 2013 (2013-02-19) | 1,2,4-8, 11,12 | INV. G01S15/10 |
| A | * abstract; figure 3 * <br> * column 2, line 5 - line 29 * <br> * column 3, line 63 - line 65 * <br> * column 4, line 6 - line 50 * <br> * column 5, line 10 * <br> ----- | 3,9,10 | G01S15/89 G01S13/28 |
| A | US 2010/194626 A1 (HOFELE FRANZ-XAVER [DE]) 5 August 2010 (2010-08-05) <br> * abstract; figures 1 - 4 * <br> * paragraphs [0002], [0012] - [0021] * <br> * paragraph [0027] - paragraph [0034] * <br> ----- | 1-12 | |

TECHNICAL FIELDS SEARCHED (IPC)

G01S

The present search report has been drawn up for all claims

| Place of search | Date of completion of the search | Examiner |
|---|---|---|
| Munich | 12 January 2018 | Knoll, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 17 18 1493

This annex lists the patent family members relating to the patent documents cited in  the above-mentioned European search report.
The members are as contained in the European Patent Office EDP file on
The European Patent Office is in no way liable for these particulars which are merely given for the purpose of information.

12-01-2018

| Patent document cited in search report | Publication date | Patent family member(s) | Publication date |
|---|---|---|---|
| US 8380770 B1 | 19-02-2013 | NONE | |
| US 2010194626 A1 | 05-08-2010 | DE 102007041669 A1 | 16-04-2009 |
| | | EP 2191294 A2 | 02-06-2010 |
| | | US 2010194626 A1 | 05-08-2010 |
| | | WO 2009026911 A2 | 05-03-2009 |

EPO FORM P0459

For more details about this annex : see Official Journal of the European Patent Office, No. 12/82

**EP 3 428 681 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7492312 B2